Europäisches Patentamt

European Patent Office

Office européen des brevets

(19)

(11) Veröffentlichungsnummer : **0 344 522 B1**

(12)                    **EUROPÄISCHE PATENTSCHRIFT**

(45) Veröffentlichungstag der Patentschrift :
04.03.92 Patentblatt 92/10

(51) Int. Cl.⁵ : **A01C 17/00, A01C 15/00**

(21) Anmeldenummer : **89108900.5**

(22) Anmeldetag : **18.05.89**

(54) **Vorrichtung zum Streuen von körnigem Material, insbesondere Dünger.**

(30) Priorität : **01.06.88 DE 3818638**

(43) Veröffentlichungstag der Anmeldung :
**06.12.89 Patentblatt 89/49**

(45) Bekanntmachung des Hinweises auf die
Patenterteilung :
**04.03.92 Patentblatt 92/10**

(84) Benannte Vertragsstaaten :
**DE FR GB**

(56) Entgegenhaltungen :
**DE-A- 1 557 987
DE-A- 3 722 507
FR-A- 2 068 619
US-A- 3 017 189**

(73) Patentinhaber : **RAUCH
LANDMASCHINENFABRIK GMBH
W-7573 Sinzheim (DE)**

(72) Erfinder : **Rauch, Norbert, Dipl.-Ing.
Bergseestrasse 49
W-7573 Sinzheim (DE)**

(74) Vertreter : **Dr.-Ing. Hans Lichti Dipl.-Ing. Heiner
Lichti Dipl.-Phys. Dr. Jost Lempert
Postfach 41 07 60 Durlacher Strasse 31
W-7500 Karlsruhe 41 (DE)**

**Beschreibung**

Die Erfindung betrifft eine Vorrichtung zum Streuen von körnigem Material, insbesondere Dünger mit einem vom Dreipunktgestänge eines Schleppers od.dgl. aufgenommenen Vorratsbehälter großer Breite mit einstellbaren Auslauföffnungen im Boden und darunter angeordneten Streueinrichtungen und mit einem den Vorratsbehälter aufnehmenden Tragrahmen, der im unteren Bereich Anschlüsse für die Unterlenker sowie in seinem oberen Bereich einen Anschluß für den Oberlenker aufweist.

Bei Streuvorrichtungen des vorgenannten Aufbaus besteht u.a. eine wesentliche Forderung darin, den Behälter mit einem größtmöglichen Volumen auszustatten, um mit einer Behälterfüllung eine größtmögliche Fläche bestreuen zu können. Die Vergrößerung des Behältervolumens stellt bei selbstfahrenden Geräten oder bei Nachläufern kein Problem dar, da sich die Nutzlast, wie auch die konstruktiven Massen problemlos aufnehmen lassen (z.B. US-PS 3 017 189). Bei solchen Geräten jedoch, die vom Dreipunktgestänge eines Schleppers od.dgl. aufgenommen werden, ist einerseits dem sich aus Nutzlast und konstruktiver Masse ergebenden Gewicht eine Höchstgrenze gesetzt, um die Lenkfähigkeit und Kippsicherheit des Schleppers zu gewährleisten, andererseits kann auch diese Höchstgrenze aus den vorgenannten Gründen nur dann ausgenutzt werden, wenn der sich aus dem Gesamtgewicht ergebende Schwerpunkt ausreichend nahe am Schlepper liegt.

Die vorgenannten Forderungen haben bei Anbaugeräten zu Behälterkonstruktionen geführt, die quer zur Fahrtrichtung breit ausladen, in Fahrtrichtung hingegen eine demgegenüber relativ geringe Erstreckung aufweisen. Dabei kann die maximale Behälterbreite der für den Straßenverkehr zulässigen Breite entsprechen. Um eine maximale Nutzlast zu erreichen, muß der Behälter der idealen Quaderform möglichst nahekommen. Es sind deshalb in dieser Hinsicht die bei Düngerstreuern üblichen Behälter in Form eines oder zweier Trichter ungünstig, da durch die allseitig geneigten Wände Volumen verloren geht, das nur durch entsprechende Bauhöhe zurückgewonnen werden kann, wodurch wiederum die Schwerpunktlage ungünstig wird.

Um eine größtmögliche Nutzlast aufnehmen zu können, muß der Tragrahmen bzw. Anbaurahmen des Gerätes entsprechend stabil ausgelegt werden. Dies ist naturgemäß umso eher zu erreichen, je größer die konstruktiven Massen der Rahmenkonstruktion sind. Jede Vergrößerung der konstruktiven Masse macht jedoch wiederum eine Reduzierung der Nutzlast erforderlich. Bei allen bekannten Düngerstreuern (z.B. US-PS 3 017 198, Firmenschrift D 514 1.85 "AMAZONE ZA-F" der Amazonen-Werke H. Dreyer GmbH & Co.KG) ist der Tragrahmen nach Art eines Gestells ausgebildet, in das der Behälter eingesetzt ist. Der Rahmen bzw. Teile desselben umgreifen also den Behälter außenseitig. Dabei müssen das Gestell bzw. einzelne Teile desselben der Behälterkontur folgen, wodurch sich unnötig große Bauteillängen ergeben, die für die eigentliche Funktion, nämlich das Abtragen der Lasten in das Dreipunktgestänge,an sich nicht notwendig wären. Dies wiederum führt zu unnötigen konstruktiven Massen. Hinzu kommt, daß die außen liegenden Rahmenteile die Reinigung des Gerätes, die wegen der korrosiven Eigenschaften von Mineraldünger häufig notwendig ist, erschweren und wegen der Vielzahl von Ecken und Winkeln sogar unmöglich machen. Hieraus wiederum kann frühzeitige Korrosion resultieren. Auch die Zugänglichkeit funktioneller Bauteile wird durch die bekannten Rahmenkonstruktionen erschwert.

Der Erfindung liegt die Aufgabe zugrunde, eine Vorrichtung des eingangs genannten Aufbaus so auszubilden, daß bei größtmöglicher Nutzlast des Behälters die konstruktiven Massen bei ausreichender Stabilität sowie der fertigungstechnische Aufwand gering gehalten werden können und die Reinigung der Vorrichtung problemlos möglich ist.

Ausgehend von der eingangs genannten Vorrichtung wird diese Aufgabe gemäß einem ersten Grundgedanken der Erfindung dadurch gelöst, daß der Tragrahmen im Bereich der Unterlenkeranschlüsse angesetzte, nach hinten und oben ansteigende Winkelstützen aufweist, die die Frontwand des Behälters durchsetzen, den Behälter-Innenraum zumindest teilweise durchgreifen und den Behälter im Bereich seiner Rückwand abstützen.

In Abkehr von den bekannten gestellartigen Konstruktionen weist der erfindungsgemäße Tragrahmen die Besonderheit auf, daß er nur zu einem geringen Teil, nämlich dort, wo er die Anschlüsse für die Unterlenker und Oberlenker aufweist, außerhalb des Vorratsbehälters angeordnet ist, während über die Winkelstützen die Last von hinten her nach vorne abgetragen wird, wodurch der Behälter im Bereich seiner Rückwand stabilisiert wird und nicht selbst die Kräfte aufnehmen und übertragen muß. Durch die weitere Maßnahme, daß die Stützen als Winkelstützen ausgebildet sind und den Behälter-Innenraum durchgreifen, wird die Last auf dem kürzestmöglichen Weg in Richtung zu den Unterlenkern abgetragen, so daß die Konstruktion mit kleinsten Profilquerschnitten und kürzester Baulänge der Tragteile auskommt, wodurch die konstruktiven Massen auf das Minimum reduziert werden können.

Da im Bereich der Seitenwände und der Rückwand keine den Behälter außen umfassende Rahmenteile vorhanden sind, ist die Reinigung besonders einfach möglich. Es gibt keine Winkel und Ecken und keine Spritzschatten beim Abspritzen des Streugerätes.

Gemäß einem Ausführungsbeispiel können die Winkelstützen den Behälter-Innenraum bis zur Rückwand durchgreifen und mit dieser in deren oberen Bereich verbunden sein.

In bevorzugter Ausführung jedoch ist vorgesehen, daß der Tragrahmen wenigstens zwei sich etwa horizontal nach hinten erstreckende obere Träger aufweist, die etwa in einer Vertikalebene mit den Unterlenkeranschlüssen liegen und im Bereich des Oberlenkeranschlusses angesetzt sind, die Frontwand des Behälters durchsetzen und den Behälter-Innenraum bis zu dessen Rückwand, mit der sie verbunden sind, durchgreifen, und daß die Winkelstützen mit den Trägern verbunden sind.

Die horizontalen Träger bilden zusammen mit den Winkelstützen und dem die Lenkeranschlüsse aufweisenden Tragrahmen eine Art Dreieckrahmen, wobei vorgesehen sein kann, daß die Winkelstützen etwa im Bereich der Längsmittelebene des Behälters mit den horizontalen Trägern verbunden sind. Die Winkelstützen greifen also etwa in der Schwerpunktebene an und bilden zusammen mit dem vorderen Teil der horizontalen Träger ein Tragwerk, das den überwiegenden Teil des Gewichtes aufnimmt, während die bis zur Rückwand des Behälters reichenden hinteren Abschnitte der Träger im wesentlichen nur die Funktion haben, den Behälter quer zu seiner Längserstreckung auszusteifen.

Dem gleichen Zweck dient die Maßnahme, daß die Frontwand des Behälters mit den Winkelstützen im Bereich deren Durchstoßpunkt verschweißt sind. Hierdurch sind Rückwand und Frontwand des Behälters an zwei mit Abstand voneinander angeordneten Stellen unmittelbar miteinander verbunden, so daß für den Behälter ebene Bleche mit der gerade notwendigen Wandstärke verwendet werden können, ohne daß die Gefahr besteht, daß die Frontwand und die Rückwand trotz ihrer großen Längserstreckung unter dem Füllgewicht ausweichen können.

Bei den eingangs genannten Vorrichtungen ist bekannt, die als Streuscheiben ausgebildeten Streueinrichtungen im Bereich der äußeren Enden des Vorratsbehälters anzuordnen. Bei dieser Ausbildung sind also die Streuscheiben weit voneinander entfernt, was den streutechnischen Vorteil mit sich bringt, daß zwischen den Streuscheiben ein gutes Streubild erhalten wird und gegenüber Zweischeibenstreuern mit eng liegenden Streuscheiben eine größere Streubreite erzielt werden kann. Bei einer solchen Vorrichtung ist erfindungsgemäß vorgesehen, daß der Tragrahmen wenigstens eine parallel zur Längsmittelebene des Behälters verlaufende Quertraverse aufweist, die im oberen Bereich des Behälters zwischen deren Längsmittelebene und der Rückwand sowie dessen Innenraum teilweise durchgreifend angeordnet ist.

Ein quer zur Fahrtrichtung breit ausladender Behälter ist während des Fahrbetriebs, insbesondere während des Streubetriebs, Biegeschwingungen ausgesetzt. Diese können zu Ermüdungsbrüchen führen. Es kommt hinzu, daß aufgrund dieser Biegeschwingungen der Abstand zwischen den Auslauföffnungen und den Streuscheiben ständigen Schwankungen unterworfen ist, wodurch sich der Aufgabepunkt bzw. die Auftreffgeschwindigkeit des Düngers auf die Schleuderscheibe ändern und damit das Streubild negativ beeinflussen kann. Mit der erfindungsgemäß vorgesehenen Quertraverse werden diese Biegeschwingungen unterbunden.

Vorzugsweise ist diese Quertraverse nicht durchgehend ausgebildet, sondern besteht aus zwei Abschnitten, die sich jeweils von einer der Winkelstützen bzw. einem der horizontalen Träger nach außen erstrecken. Auch hierdurch wird bei geringster konstruktiver Masse die Kraft an einem kürzestmöglichen Hebelarm aufgenommen.

Der gesamte Aufbau ist gemäß einem Ausführungsbeispiel dadurch gekennzeichnet, daß der Tragrahmen aus zwei vorderen senkrechten Stützen, die an ihren unteren Enden die Unterlenkeranschlüsse aufweisen, und zwei diese aussteifenden horizontalen Streben, von denen die obere den Oberlenkeranschluß aufnimmt, sowie den beiden sich horizontal nach hinten erstreckenden oberen Trägern, den an diesen angreifenden Winkelstützen, den an diesen bzw. an die Winkelstützen anschließenden Quertraversen-Abschnitten und im Bereich der Unterlenkeranschlüsse sich horizontal nach hinten erstreckenden unteren Trägern besteht, die direkt oder über nach den Seiten auskragende Konsolen die Streueinrichtungen tragen.

Der gesamte Tragrahmen besteht also aus einem vorderen, im wesentlichen rechteckigen Tragwerk, das quer zur Fahrtrichtung angeordnet ist, je zwei nach hinten offenen U-förmigen Tragwerken, die von den oberen und unteren horizontalen Trägern und dem vorderen Rahmen gebildet sind, wobei die oberen Träger durch die Winkelstützen abgestützt sind.

Bei Düngerstreuern ist im oberen Bereich des Behälters ein sich über dessen Horizontalquerschnitt erstreckendes Sieb angeordnet, das nur Partikel bestimmter Größe durchläßt und vor allem grobe Teile, wie Steine, Konglomerate , Metallteile od.dgl., die die funktionellen Teile des Streuers beeinträchtigen und beschädigen könnten, zurückhält. Erfindungsgemäß wird dieses Sieb in die Tragkonstruktion dadurch einbezogen, daß das Sieb aus einem Mittelteil, das in den Behälter eingeschweißt ist, und zwei herausnehmbaren Seitenteilen besteht.

Das Mittelteil des Siebs verbindet also Frontwand und Rückwand des Behälters in dessen mittleren Bereich und dient damit gleichzeitig der Aussteifung des Behälters, während die beiden Seitenteile des Siebs - wie bekannte einteilige Sieben - herausnehmbar sind, um die Zugänglichkeit des Behälters zu wahren.

Wie bereits angedeutet, soll der Behälter weitestmöglich an die Quaderform angepaßt sein. Dies ist natürlich nur beschränkt möglich, wenn der Dünger allein durch Schwerkraft nach unten rutschen soll. Dies setzt voraus, daß zumindest die Frontwand und die Rückwand nach unten zu einer Bodenmulde konvergieren. Die horizontale Anordnung der Bodenmulde erfordert dann einen Querförderer, um den Dünger zu den außen liegenden Auslauföffnungen zu transportieren. Die zuvor beschriebene Ausführung des Tragrahmens ermöglicht gemäß einem weiteren Grundgedanken der Erfindung eine Ausbildung der Vorrichtung derart, daß die Bodenmulde als gesondertes Bauteil ausgebildet und mit den Wänden des Behälters mechanisch verbunden ist.

Aufgrund der Ausbildung des Tragrahmens braucht der Behälter nicht mehr als selbsttragende Schweißkonstruktion ausgebildet sein, wodurch sich die vorteilhafte Möglichkeit ergibt, die Bodenmulde als gesondertes Bauteil auszubilden und mit den Behälterwänden mechanisch, insbesondere lösbar zu verbinden. Damit wird zugleich die Möglichkeit geschaffen, den Querförderer bei abgenommener Bodenmulde von unten her einbauen und ausbauen zu können. Damit ist zugleich der Tatsache Rechnung getragen, daß die den Behälter durchgreifenden Winkelstützen und horizontalen Träger des Tragrahmens einen Ein- und Ausbau von oben erschweren und bei einem sich über die gesamte Breite erstreckenden Querförderer fast unmöglich machen. Andererseits ist in montagetechnischer Hinsicht der Ein- und Ausbau von unten auch einfacher zu bewerkstelligen. Weiterhin ist es möglich, durch Abnahme der Bodenmulde den gesamten Behälter einschließlich der Einbauteile, wie Rahmenteile, Querförderer, Auslauföffnungen etc. einwandfrei zu reinigen, beispielsweise mit einem Schlauch auszuspritzen.

Die vorgenannte Ausführung gibt ferner die Möglichkeit, die Bodenmulde aus rostfreiem Stahl auszubilden und mit den Wänden des Behälters zu verschrauben, während der sonstige Behälter aus normalem Stahl bestehen und lackiert sein kann. Damit wird der besonderen Beanspruchung der Bodenmulde aufgrund des dort umlaufenden Querförderers Rechnung getragen und Korrosion vermieden.

Gemäß einem weiteren Ausführungsbeispiel ist vorgesehen, daß die Bodenmulde wenigstens eine großflächige Öffnung zum Entleeren des Behälters aufweist, die durch einen außerhalb des Behälters angeordneten Verschluß abgedeckt ist.

Während man die Bodenmulde nur in Ausnahmefällen abnehmen wird, ist es weit häufiger notwendig, den Behälter nach der Streuarbeit zu entleeren. Zu diesem Zweck dient die großflächige Öffnung(en) in der Bodenmulde. Um diese schnell freilegen zu können, sind mit Vorteil Schnellverschlüsse vorgesehen, die ein schnelles Lösen bzw. Abnehmen des Verschlusses gestatten.

Es ist ferner von Vorteil, wenn die Entleeröffnung(en) im mittleren Bereich des Behälters angeordnet ist-/sind. In diesem Bereich befinden sich aufgrund der erfindungsgemäßen Ausbildung des Tragrahmens keine Bauteile, so daß der Dünger ungehindert nach unten auslaufen kann. Auch für die routinemäßige Reinigung des Behälters nach dem Streubetrieb kann der Verschluß geöffnet werden.

Von Vorteil ist es, wenn die Frontwand und die Rückwand des Behälters im Bereich ihrer unteren Längskanten aussteifend profiliert sind. Bei dieser aussteifenden Profilierung kann es sich um einfache Abkantungen handeln. Sie stabilisieren nicht nur die unteren freien Längskanten von Frontwand und Rückwand, sondern schaffen ferner die Möglichkeit, für den Querförderer wenigstens ein mittig angeordnetes Lager aufzunehmen, indem das Lager von wenigstens einer den Behälter querenden Konsole getragen ist, die im Bereich der unteren Längskanten von Frontwand und Rückwand befestigt ist.

Weitere Einzelheiten und Vorteile der Erfindung ergeben sich aus der nachfolgenden Beschreibung der Zeichnung, die einige bevorzugte Ausführungsformen wie folgt zeigt:

Figur 1 Eine Ansicht auf die Frontwand des Behälters mit den Lenkeranschlüssen;

Figur 2 eine Draufsicht auf den Behälter;

Figur 3 eine Seitenansicht des Behälters in einer ersten Ausführungsform;

Figur 4 einen Schnitt IV - IV gemäß Figur 1;

Figur 5 eine der Figur 3 ähnliche Ansicht einer anderen Ausführungsform des Behälters;

Figur 6 einen Schnitt VI - VI im Bereich der Bodenmulde und

Figur 7 eine Teilansicht der Bodenmulde gemäß Figur 6.

Der in der Zeichnung wiedergegebene Düngerstreuer weist einen Vorratsbehälter 1 auf, dessen Breite etwa der für den Fahrbetrieb auf Straßen maximal zulässigen Breite entspricht. Er besteht aus einem rechteckigen Oberteil 2, an das sich nach unten eine Frontwand 3 und eine Rückwand 4 anschließen, die zu einer Bodenmulde 5 konvergieren. Ferner schließen sich an das rechteckige Teil 2 nach unten Seitenwände 6 und 7 an, die zunächst konvergieren und im unteren Bereich wieder senkrecht verlaufen. Die Bodenmulde weist an ihren äußeren Enden Auslauföffnungen mit Auslaufschächten 8 auf, unterhalb der Streueinrichtungen 9 in Form von Schleuderscheiben angeordnet sind. Innerhalb des Vorratsbehälters 1 und unmittelbar oberhalb der Bodenmulde 5 ist ein Querförderer 10 angeordnet, der den Dünger von der Mitte aus nach außen zu den Ablaufschächten 8, denen im übrigen einstellbare Dosierschieber zugeordnet sind, transportiert. Der Querförderer 10 ist beim gezeigten Ausführungsbeispiel als Schnecke ausgebildet, die an ihren Enden in den Seitenwänden 6,7 und im mittleren Bereich in einem Lager 11 abgestützt ist und die zu beiden Seiten dieses Lagers 11 gegensinnige Schneckengänge aufweist. Der Querförderer 10 wird von einem außerhalb angeordneten Hydraulikmotor 12 angetrieben.

Der Behälter 1 wird mittels eines Tragrahmens 13 von einem nicht gezeigten Dreipunktgestänge eines Schleppers aufgenommen. Der Tragrahmen 13 besteht aus vorderen senkrechten Stützen 14,15, die außerhalb des Behälters 1 angeordnet und durch eine obere Strebe 16 und eine untere Strebe 17 miteinander verbunden sind. Die senkrechten Stützen 14,15 weisen in ihrem unteren Bereich die Unterlenkeranschlüsse 18 auf, während der Oberlenkeranschluß 19 mit der oberen Querstrebe 16 verbunden und in einer Einbuchtung des Vorratsbehälters angeordnet ist.

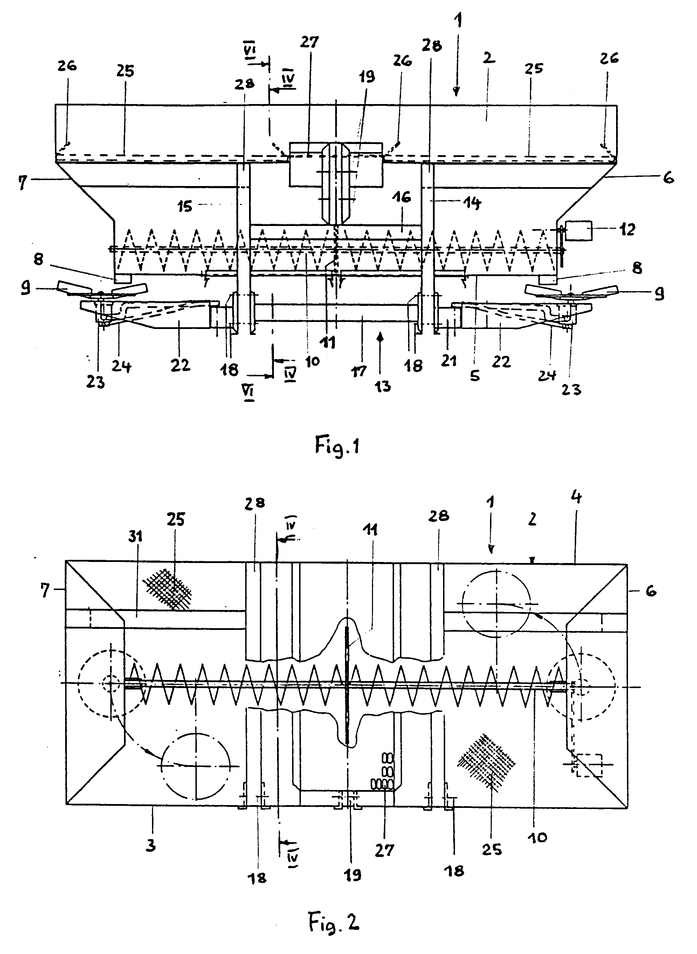

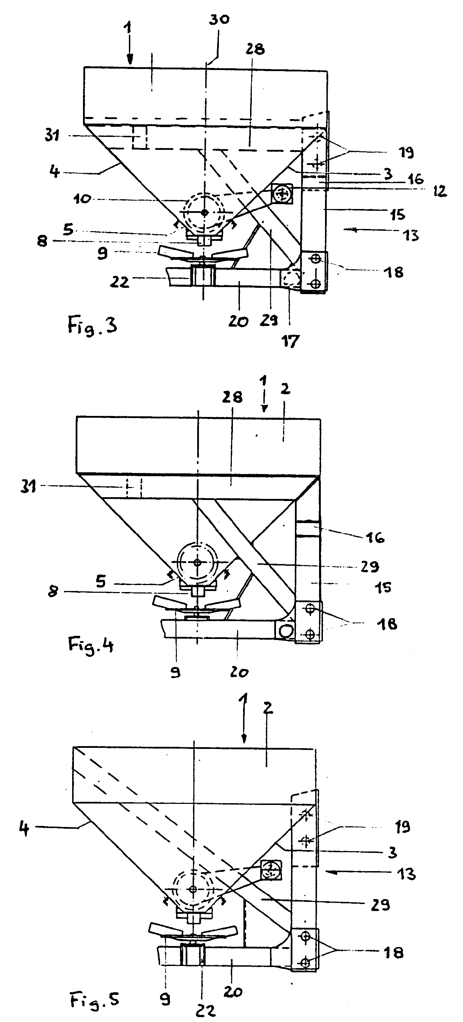

Im Bereich der Unterlenkeranschlüsse weist der Tragrahmen sich nach hinten etwa horizontal erstreckende Träger 20 (siehe Fig. 3-5) auf, an denen sich wiederum seitlich erstreckende Konsolen 21 anschließen, die an ihren Enden Schwenkarme 22 aufnehmen. Die Schwenkarme 22 tragen die Schleuderscheiben 9, die mittels der Schwenkarme aus der Betriebslage in eine unwirksame Lage (in Fig.2 strichpunktiert dargestellt) ausgeschwenkt werden können. Auch die Schleuerscheiben 9 sind mittels Hydraulikmotor 23 angetrieben, dessen Versorgungsleitungen 24 in den Schwenkarm hineingeführt sind.

In den oberen rechteckigen Teil 2 des Behälters 1 ist ein Sieb eingesetzt, das aus zwei herausnehmbaren Seitenteilen 25, die zu diesem Zweck mit Griffen 26 versehen sind, sowie einem Mittelteil 27 besteht, das beispielsweise als Lochblech ausgebildet ist und an der Frontwand 3 und der Rückwand 4 angeschweißt ist, um diese miteinander zu verbinden.

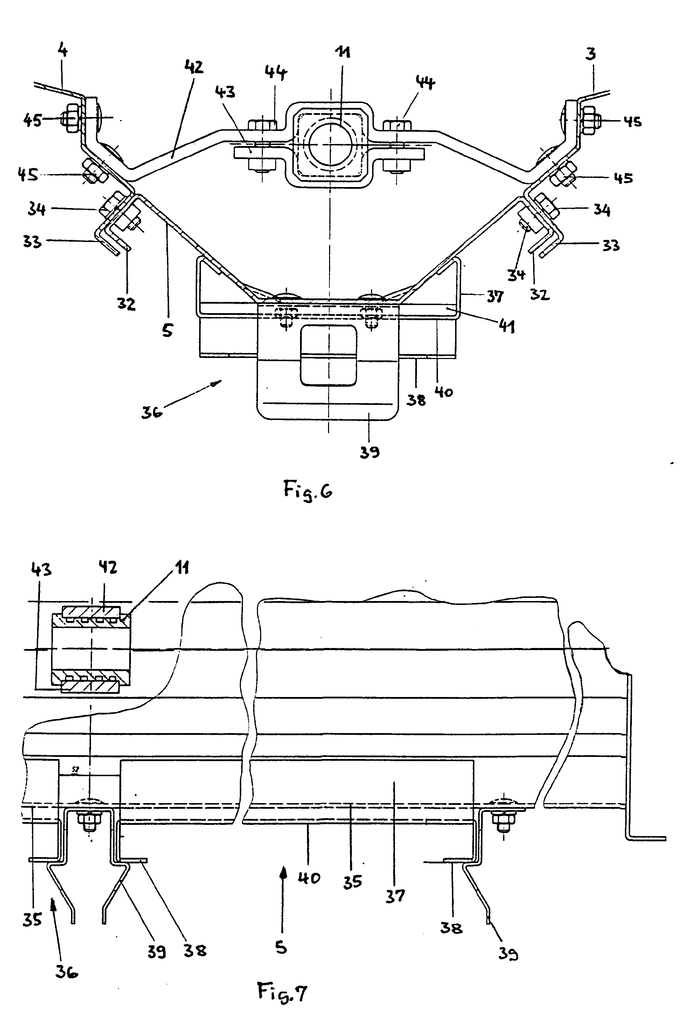

Der Tragrahmen 3 weist in den in den Figuren 1 bis 4 wiedergegebenen Ausführungsformen sich nach hinten erstreckende obere horizontale Träger 28 auf, die sich bis zur Rückwand 4 erstrecken und an deren Enden die Rückwand angeschweißt ist. Ferner weist der Tragrahmen 13 eine Winkelstütze 29 auf, die, wie Fig. 3 und 4 zeigen, im Bereich der Unterlenkeranschlüsse 18 an den Tragrahmen 13 angeschlossen sind und sich nach hinten und oben erstrecken und mit ihrem oberen Ende im Bereich der Längsmittelebene 30 des Behälters 1 mit den oberen Trägern 28 verbunden sind. Ferner sind an die beiden horizontalen Träger 28 jeweils nach außen reichende Quertraversen-Abschnitte 31 angeschlossen, die an ihren Enden mit den Seitenwänden 6,7 des Behälters 1 verschweißt sind.

Die beiden Winkelstützen 29 durchsetzen die Frontwand 3 und sind dort mit dieser verschweißt. Sie durchgreifen, wie auch die oberen horizontalen Träger 28 den Behälter-Innenraum. Auch die Quertraversen-Abschnitte 31 durchsetzen diesen Innenraum.

Das Ausführungsbeispiel gem. Figur 5 unterscheidet sich von dem der Figuren 1 bis 4 dadurch, daß die Winkelstützen 29 bis zur Rückwand 4 durchlaufen und im Bereich der oberen Längskante des rechteckigen Behälterteils 2 enden und dort mit der Rückwand 4 verschweißt sind. Auch hier können zusätzlich die Quertraversen-Abschnitte 31 vorgesehen sein, die dann an den Winkelstützen 29 angeschweißt sind.

In Figur 6 sind der untere Teil der Frontwand 3 und der Rückwand 4 des Behälters 1 sowie die Bodenmulde 5 in vergrößertem Schnitt gezeigt. Die Bodenmulde 5 ist an ihren oberen Rändern mit je einem Flansch 32 versehen. Ebenso sind die Frontwand 3 und die Rückwand 4 an ihren unteren Längskanten mit Flanschen 33 versehen, an denen die Bodenmulde 5 mittels Schrauben 34 lösbar befestigt ist. Während der Behälter aus normalem Baustahl ausgebildet und lackiert sein kann, besteht die Bodenmulde 5 vorzugsweise aus rostfreiem Stahl.

Die Bodenmulde 5 ist in ihrem mittleren Bereich mit zwei nebeneinander liegenden Entleerungsöffnungen 35 versehen, denen ein außen liegender Verschluß 36 zugeordnet ist. Der Verschluß 36 besteht aus einem Blechformteil, das mit hochgebogenen und abgewinkelten Stegen 37 gegen die Außenseite der Bodenmulde 5 anliegt und nach unten abgebogene Flansche 38 aufweist. Diese werden in der Schließlage von federnden Schnellverschlüssen 39 untergriffen, die an der Bodenmulde 5 befestigt sind. Ferner weist der Verschluß eine ebene Platte 40 mit einer Dichtung 41 auf, die mittels der Schnellverschlüsse 39 gegen den Rand der Entleerungsöffnung 35 gedrückt wird und diese während des Betriebs dichtend abschließt.

Beim gezeigten Ausführungsbeispiel weist, wie bereits angedeutet, der Querförderer 10 ein mittiges Stützlager 11 auf. Das Stützlager 11 ist an einer den Behälter im unteren Bereich querenden Konsole 42 mittels einer Formlasche 43 und Schrauben 44 lösbar befestigt. Die Konsole 42 ist an der Frontwand 3 und der Rückwand 4 des Behälters gleichfalls mittels Schrauben 45 lösbar befestigt. Die Frontwand 3 und die Rückwand 4 weisen zu diesem Zweck im Bereich der Konsolen-Auflage Abkantungen auf. Durch die Konsole 42 wird eine zusätzliche Aussteifung des Behälters im Bereich der unteren freien Längskanten von Frontwand 3 und Rückwand 4 erzielt. Dem gleichen Zweck dienen die durch Abkantungen erhaltenen Flansche 33.

Die Bodenmulde 5 bildet mit den Auslaufschächten 8 eine Baueinheit, die nach Lösen der Schrauben 34 leicht und vollständig demontiert und wieder angebaut werden kann.

**Patentansprüche**

1. Vorrichtung zum Streuen von körnigem Material, insbesondere Dünger mit einem vom Dreipunktgestänge eines Schleppers od.dgl. aufgenommenen Vorratsbehälter (1) großer Breite mit einstellbaren Auslauföffnungen im Boden und darunter angeordneten Streueinrichtungen (9) und mit einem den Vorratsbehälter aufnehmenden Tragrahmen (13), der im unteren Bereich Anschlüsse für die Unterlenker (18) sowie in seinem oberen Bereich einen Anschluß für den Oberlenker (19) aufweist, dadurch gekennzeichnet, daß der Tragrahmen (13) im Bereich der Unterlenkeranschlüsse (18) angesetzte, nach hinten und oben ansteigende Winkelstützen (29) aufweist, die die Frontwand (3) des Behälters (1) durchsetzen, den Behälter-Innenraum zumindest teilweise durchgreifen und den Behälter (1) im Bereich seiner Rückwand (4) abstützen.

2. Vorrichtung nach Anspruch 1, dadurch gekennzeichnet, daß die Winkelstützen (29) den Behälter-Innenraum bis zur Rückwand (4) durchgreifen und mit dieser in deren oberen Bereich verbunden sind.

3. Vorrichtung nach Anspruch 1, dadurch gekennzeichnet, daß der Tragrahmen (13) wenigstens zwei sich etwa horizontal nach hinten erstreckende obere Träger (28) aufweist, die etwa in einer Vertikalebene mit den Unterlenkeranschlüssen (18) liegen und im Bereich des Oberlenkeranschlusses (19) angesetzt sind, die Frontwand (3) des Behälters (1) durchsetzen und den Behälter-Innenraum bis zu dessen Rückwand (4), mit der sie verbunden sind, durchgreifen, und daß die Winkelstützen (29) mit den Trägern (28) verbunden sind.

4. Vorrichtung nach Anspruch 3, dadurch gekennzeichnet, daß die Winkelstützen (29) etwa im Bereich der Längsmittelebene (30) des Behälters (1) mit den horizontalen Trägern (28) verbunden sind.

5. Vorrichtung nach einem der Ansprüche 1 bis 4, dadurch gekennzeichnet, daß die Frontwand (4) des Behälters (1) mit den Winkelstützen (21) im Bereich deren Durchstoßpunktsverschweißt sind.

6. Vorrichtung nach einem der Ansprüche 1 bis 5, bei der die als Streuscheiben ausgebildeten Streueinrichtungen im Bereich der äußeren Enden des Vorratsbehälters angeordnet sind, dadurch gekennzeichnet, daß der Tragrahmen (13) wenigstens eine parallel zur Längsmittelebene (30) des Behälters (1) verlaufende Quertraverse (31) aufweist, die im oberen Bereich des Behälters (1) zwischen deren Längsmittelebene (30) und der Rückwand (4) sowie dessen Innenraum teilweise durchgreifend angeordnet ist.

7. Vorrichtung nach einem der Ansprüche 1 bis 6, dadurch gekennzeichnet, daß die Quertraverse aus zwei Abschnitten (31) besteht, die sich jeweils von einer der Winkelstütze (29) bzw. einem der horizontalen Träger (28) nach außen erstrecken.

8. Vorrichtung nach einem der Ansprüche 1 bis 7, dadurch gekennzeichnet, daß die Quertraversen-Abschnitte (31) mit den Seitenwänden (6,7) des Behälters (1) verbunden sind.

9. Vorrichtung nach einem der Ansprüche 1 bis 8, dadurch gekennzeichnet, daß der Tragrahmen (13) aus zwei vorderen senkrechten Stützen (14,15), die an ihren unteren Enden die Unterlenkeranschlüsse (18) aufweisen, und zwei diese aussteifenden horizontalen Streben (16,17), von denen die obere (16) den Oberlenkeranschluß (19) aufnimmt, sowie den beiden sich horizontal nach hinten erstreckenden oberen Trägern (28), den an diesen angreifenden Winkelstützen (29), den an diesen bzw. an die Winkelstützen anschließenden Quertraversen-Abschnitten (30) und im Bereich der Unterlenkeranschlüsse (18) sich horizontal nach hinten erstreckenden unteren Trägern (20) besteht, die direkt oder über nach den Seiten auskragende Konsolen (21) die Streueinrichtungen (9) tragen.

10. Vorrichtung nach einem der Ansprüche 1 bis 9, mit einem im oberen Bereich des Behälters eingesetzten, sich über dessen Horizontalquerschnitt erstreckenden Sieb, dadurch gekennzeichnet, daß das Sieb aus einem Mittelteil (27), das in den Behälter (1) eingeschweißt ist, und zwei herausnehmbaren Seitenteilen (25) besteht.

11. Vorrichtung, nach einem der Ansprüche 1 bis 10 wobei die Frontwand (3) und die Rückwand (4) des Behälters (1) nach unten zu einer Bodenmulde (15) konvergieren, und ein Querförderer in der Bodenmulde angeordnet ist, der den Dünger zu den außen liegenden Auslauföffnungen transportiert, dadurch gekennzeichnet, daß die Bodenmulde (5) als gesondertes Bauteil ausgebildet und mit den Wänden (3,4,6,7) des Behälters (1) mechanisch verbunden ist.

12. Vorrichtung nach Anspruch 11, dadurch gekennzeichnet, daß die Bodenmulde (5) aus rostfreiem Stahl besteht und mit den Wänden (3,4,6,7) des Behälters (1) verschraubt ist.

13. Vorrichtung nach einem der Ansprüche 1 bis 12, dadurch gekennzeichnet, daß die Bodenmulde (5) mit der Einstellvorrichtung für die Auslauföffnungen eine Baueinheit bildet.

14. Vorrichtung nach einem der Ansprüche 1 bis 13, dadurch gekennzeichnet, daß die Bodenmulde (5) wenigstens eine großflächige Öffnung (35) zum Entleeren des Behälters (1) aufweist, die durch einen außerhalb des Behälters (1) angeordneten Verschluß (36) abgedeckt ist.

15. Vorrichtung nach einem der Ansprüche 1 bis 14, dadurch gekennzeichnet, daß die Entleeröffnung (35) im mittleren Bereich des Behälters (1) angeordnet ist.

16. Vorrichtung nach einem der Ansprüche 1 bis 15, dadurch gekennzeichnet, daß die Frontwand (3) und die Rückwand (4) des Behälters (1) im Bereich ihrer unteren Längskanten aussteifend profiliert sind.

17. Vorrichtung nach einem der Ansprüche 1 bis 16, mit wenigstens einem mittig angeordneten Lager für den Querförderer, dadurch gekennzeichnet, daß das Lager (11) von wenigstens einer den Behälter (1) querenden Konsole (41) getragen ist, die im Bereich der unteren Längskanten von Frontwand (3) und Rückwand (4) befestigt ist.


## Claims

1. Apparatus for broadcasting granular material, particularly fertilizer with a wide storage container (1) received by a three-point linkage of a tractor or the like and having adjustable discharge openings in the bottom and with broadcasting devices (9) positioned below the same and with a supporting frame (13) receiving the storage container and which has in its lower area connections for the lower linkages (18) and in its upper area a connection for the upper linkage (19), characterized in that in the vicinity of the lower linkage connections (18) the supporting frame (13) has attached upwardly and rearwardly rising angle brackets (29), which pass through the front wall (3) of the container (1), pass at least partly through the container interior and support the container (1) in the vicinity of its rear wall (4).

2. Apparatus according to claim 1, characterized in that the angle brackets (29) pass through the container interior up to the rear wall (4) and are connected to the latter in its upper area.

3. Apparatus according to claim 1, characterized in that the supporting frame (13) has at least two roughly horizontally, rearwardly extending upper beams (28), which are approximately located in a vertical plane with the lower guide connections (18) and are attached in the vicinity of the upper linkage connection (19), pass through the front wall (3) of the container (1) and traverse the container interior up to its rear wall (4) to which they are connected and that the angle brackets (29) are connected to the beams (28).

4. Apparatus according to claim 3, characterized in that the angle brackets (29) are connected roughly in the vicinity of the median longitudinal plane (30) of the container (1) to the horizontal beams (28).

5. Apparatus according to one of the claims 1 to 4, characterized in that the front wall (4) of the container (1) is welded to the angle brackets (21) in the vicinity of the intersection point thereof.

6. Apparatus according to one of the claims 1 to 5, in which the broadcasting devices constructed as broadcasting disks are positioned in the vicinity of the outer ends of the storage container, characterized in that the supporting frame (13) has at least one cross-member (31) running parallel to the media longitudinal plane (30) of the container (1) and which is located in the upper area of said container (1) between its median longitudinal plane (30) and the rear wall (4) and partly traverses the interior thereof.

7. Apparatus according to one of the claims 1 to 6, characterized in that the cross-member comprises two portions (31), which in each case extend from one of the angle brackets (29) or one of the horizontal beams (28) in the outwards direction.

8. Apparatus according to one of the claims 1 to 7, characterized in that the cross-member portions (31) are connected to the side walls (6, 7) of the container (1).

9. Apparatus according to one of the claims 1 to 8, characterized in that the supporting frame (13) comprises two front, vertical supports (14, 15), which are provided at their lower ends with the lower linkage connections (18), and two horizontal struts (16, 17) stiffening the latter, whereof the upper strut (16) receives the upper linkage connection (19), as well as the two horizontally and rearwardly extending upper beams (28), the angle brackets (29) engaging thereon, the cross-member portions (30) connected thereto or to the angle brackets and lower beams (20) extending horizontally rearwards in the vicinity of the lower linkage connections (18) and which carry the broadcasting devices (9) either directly or by means of the laterally projecting brackets (21).

10. Apparatus according to one of the claims 1 to 9 with a screen inserted in the upper area of the container and extending over its horizontal cross-section, characterized in that the screen comprises a central part (27), which is welded into the container (1), and two removable side parts (25).

11. Apparatus according to one of the claims 1 to 10, in which the front wall (3) and the rear wall (4) of the container (1) converge downwards to a bottom trough (5) and a cross-conveyor is arranged in said bottom trough and conveys the fertilizer to the outwardly positioned discharge openings, characterized in that the bottom trough (5) is constructed as a separate component and is mechanically connected to the walls (3, 4, 6, 7) of the container (1).

12. Apparatus according to claim 11, characterized in that the bottom trough (5) is made from stainless steel and is screwed to the walls (3, 4, 6, 7) of the container (1).

13. Apparatus according to one of the claims 1 to 12, characterized in that the bottom trough (5) forms a structural unit with the adjusting mechanism for the discharge openings.

14. Apparatus according to one of the claims 1 to 13, characterized in that the bottom trough (15) has at least one large-area opening (35) for emptying the container (1) and which is covered by a closure (36) positioned outside the container (1).

15. Apparatus according to one of the claims 1 to 14, characterized in that the emptying opening (35) is positioned in the central area of the container (1).

16. Apparatus according to one of the claims 1 to 15, characterized in that the front wall (3) and the rear wall (4) of the container (1) are profiled in stiffening manner in the vicinity of their lower longitudinal edges.

17. Apparatus according to one of the claims 1 to 16, with at least one centrally positioned bearing for the cross-conveyor, characterized in that the bearing (11) is carried by at least ond bracket (41) crossing the container (1) and which is fixed in the vicinity of the lower longitudinal edges of the front wall (3) and the rear wall (4).

## Revendications

1. Dispositif pour épandre du matériau granulé, en particulier de l'engrais, comprenant un réservoir de stockage (1) de grande largeur porté par l'attelage à trois points d'un tracteur ou analogue, dont le fond présente des ouvertures de sortie sous lesquelles sont situés des dispositifs d'épandage (9), et un cadre porteur (13) recevant le réservoir de stockage et muni, dans la partie inférieure, de raccords pour les bras oscillants inférieurs (18) ainsi que, dans la partie supérieure, d'un raccord pour le bras oscillant supérieur (19), **caractérisé en ce** que le cadre porteur (13) présente dans la région des raccordements des bras oscillants inférieurs (18), des équerres de support (29) inclinées vers l'arrière et le haut qui traversent la paroi frontale (3) du réservoir (1), s'étendent au moins partiellement au travers de l'intérieur du réservoir et soutiennent ledit réservoir (1) dans la région de sa paroi arrière (4).

2. Dispositif selon la revendication 1, caractérisé en ce que les équerres de support (29) traversent l'intérieur du réservoir jusqu'à la paroi arrière (4) et qu'elles sont reliées à celle-ci dans sa partie supérieure.

3. Dispositif selon la revendication 1, caractérisé en ce que le cadre porteur (13) comprend au moins deux supports supérieurs (28) s'étendant sensiblement horizontalement vers l'arrière, qui se situent sensiblement dans le même plan vertical que les raccordements pour les bras oscillants inférieurs (18) et sont fixés dans la région du raccordement du bras oscillant supérieur (19), traversent la paroi frontale (3) du réservoir (1) et s'étendent au travers de l'intérieur du réservoir jusqu'à la paroi arrière (4) de celui-ci à laquelle ils sont rattachés, et que les équerres de support (29) sont reliées aux support (28).

4. Dispositif selon la revendication 3, caractérisé en ce que les équerres de support (29) sont rattachées, sensiblement dans la région du plan longitudinal médian (30) du réservoir (1), aux supports horizontaux (28).

5. Dispositif selon l'une des revendications 1 à 4, caractérisé en ce que la paroi frontale (4) du réservoir (1) est soudée avec les équerres de support (21) dans la région des points de percement de celles-ci.

6. Dispositif selon l'une des revendications 1 à 5, dans lequel les dispositifs d'épandage conformés en disques d'épandage sont disposés dans la région des extrémités extérieures du réservoir de stockage, caractérisé en ce que le cadre porteur (13) comporte au moins une traverse (31) qui s'étend parallèlement au plan longitudinal médian (30) du réservoir (1) et est disposée dans la partie supérieure du réservoir (1), entre le plan longitudinal médian (30) de celui-ci et la paroi arrière (4), en traversant partiellement l'intérieur dudit réservoir.

7. Dispositif selon l'une des revendications 1 à 6, caractérisé en ce que la traverse est constituée de deux sections (31) dont chacune s'étend à partir de l'une des équerres de support (29) et respectivement de l'un des supports horizontaux (28) vers l'extérieur.

8. Dispositif selon l'une des revendications 1 à 7, caractérisé en ce que les sections de traverse (31) sont reliées aux parois latérales (6, 7) du réservoir (1).

9. Dispositif selon l'une des revendications 1 à 8, caractérisé en ce que le cadre porteur (13) se compose de deux supports antérieurs verticaux (14, 15) munis à leurs extrémités inférieures des raccordements pour les bras oscillants inférieurs (18), et de deux entretoises horizontales (16, 17) qui assurent le raidissement de ceux-ci et dont l'entretoise supérieure (16) reçoit le raccordement pour le bras oscillant supérieur (19), ainsi que des deux supports supérieurs (28) qui s'étendent horizontalement vers l'arrière, des équerres de support (29) fixées sur ceux-ci, des sections de traverse (30) faisant suite auxdits supports et respectivement aux équerres de support, et des supports inférieurs (20) qui s'étendent horizontalement vers l'arrière dans la région des raccordements pour les bras oscillants inférieurs (18) et portent, directement ou par l'intermédiaire de consoles (21) en saillie dans le sens latéral, les dispositifs d'épandage (9).

10. Dispositif selon l'une des revendications 1 à 9, équipé dans la partie supérieure du réservoir d'un tamis qui s'étend sur la section transversale horizontale dudit réservoir, caractérisé en ce que le tamis est constitué par un élément central (27) soudé dans le réservoir (1) et par deux éléments latéraux (25) amovibles.

11. Dispositif selon l'une des revendications 1 à 10, la paroi frontale (3) et la paroi arrière (4) du réservoir (1) convergeant vers le bas en une cuvette de fond (5) et un transporteur transversal acheminant l'engrais vers les ouvertures de sortie situées à l'extérieur étant disposé dans la cuvette de fond, caractérisé en ce que la cuvette de fond (5) est réalisée sous la forme d'un élément de construction séparé et reliée mécaniquement aux parois (3, 4, 6, 7) du réservoir (1).

12. Dispositif selon la revendication 11, caractérisé en ce que la cuvette de fond (5) est réalisée en acier inoxydable et vissée sur les parois (3, 4, 6, 7) du réservoir (1).

13. Dispositif selon l'une des revendications 1 à 12, caractérisé en ce que la cuvette de fond (5) forme avec le dispositif de réglage pour les ouvertures de sortie une unité de construction.

14. Dispositif selon l'une des revendications 1 à 13, caractérisé en ce que la cuvette de fond (5) comporte au moins une ouverture (35) de grande surface pour l'évacuation du réservoir (1), laquelle est fermée par un obturateur (36) situé à l'extérieur du réservoir (1).

15. Dispositif selon l'une des revendications 1 à 14, caractérisé en ce que l'ouverture de vidange (35) est disposée dans la partie centrale du réservoir (1).

16. Dispositif selon l'une des revendications 1 à 15, caractérisé en ce que la paroi frontale (3) et la paroi arrière (4) du réservoir (1) présentent un profil de raidissement dans la région de leurs arêtes longitudinales inférieures.

17. Dispositif selon l'une des revendications 1 à 16, comprenant au moins un palier central pour le transporteur transversal, caractérisé en ce que le palier (11) est supporté par au moins une console (41) traversant le réservoir (1) et fixée dans la région des arêtes longitudinales inférieures de la paroi frontale (3) et de la paroi arrière (4).

Fig.1

Fig. 2

Fig.3

Fig.4

Fig.5

Fig. 6

Fig. 7